# EUROPEAN PATENT SPECIFICATION

(11) **EP 1 670 662 B1**
(45) Date of publication and mention of the grant of the patent: **14.03.2007**
(21) Application number: 04764738.3
(22) Date of filing: 02.09.2004
(51) Int. Cl.: B60P 1/64, B65D 88/00

(54) **CONTAINER FOR THE TRANSPORT OF GOODS**
BEHÄLTER FÜR DEN TRANSPORT VON GÜTERN
CONTENEUR POUR LE TRANSPORT DE MARCHANDISES

(30) Priority: 25.09.2003 IT MI20031834
(43) Date of publication of application: 21.06.2006
(73) Proprietor: FENATI, Roberto, 16034 Portofino (GE) (IT)
(72) Inventor: FENATI, Roberto, 16034 Portofino (GE) (IT)
(74) Representative: Mittler, Enrico
(86) International application number: PCT/EP2004/009779
(87) International publication number: WO 2005/030527

(56) References cited:
- DE-A- 2 239 779
- DE-A- 2 348 824
- GB-A- 1 341 970
- US-A- 2 892 556
- US-A- 3 917 304
- US-A- 4 392 662
- US-A- 4 834 000
- US-A- 4 875 814

## Description

The present invention refers to a caisson for the transport of goods, in particular to a container, that is a large metal caisson with standard dimensions, for maritime, truck, or railway transport of goods.

In the last few years, in the international shipping sector, big technological changes have been observed in port structures, in the field of informatics and in the field of communications.

Larger and larger container-ships are being constructed, even of 8000 teus (measurement unit for containers), against the 1500/2000 teus ships available a few years ago.

Port terminals are increasingly efficient and capable to offer larger and larger wharves and higher and higher depths (at least 16 m) to receive these gigantic ships.

There are upgradings of electronic infrastructures in order to offer all the users the real time information relative to the movements of goods.

All this with the purpose to reduce to the least the dead times for the transit of goods in the various ports in the world and with the various port authorities, and to allow the goods to reach their markets and therefore their consumers in the shortest possible time.

Experts in the field foresee, in fact, very high percentages of growth in sea forwarding and with conspicuous investments in this sector for the future.

In this extreme modernisation context, in this increasingly frenetic transport cycle, container plays a very important role.

The container has simplified the transport of goods, and for this reason port terminals with specific cranes have been built to handle them, specific ships have been built to transport them, and specific trailers for their ground transport have been built.

However the container, in its various standard dimensions, has always remained the same The container has a parallelepiped shape, and normally, one of its smaller surfaces includes two doors from which the goods get loaded and unloaded

When containers are transported on the land they are put on lorries, predisposed for their transport, and for the loading and the unloading of goods they must reach wharves where fork lifts can get close and get inside the same container in order to be able to handle the goods.

US-A- 3,938,678 describes a container and a structure with wheels which allows it to get inside the container only from the wharf, when hooked by a specific fork lift. Such structure is not integral part of the container, since it gets completely extracted from the same, and it can be utilised only with the aid of the wharf

The wharf is a raised masonry work placed at the level of the base of the container in order to facilitate the transfer of the goods from outside to inside of it and vice-versa In this way fork lifts can even access inside the container.

US-A- 2 892 556 discloses a vehicle load handling construction according to the preamble of claim 1.

In view of the state of the art herein described, object of the present invention is to provide an improved container capable to considerably reduce the dead times for the loading and the unloading of goods, i.e. the dead times for transit.

According to the present invention, such object has been attained by means of a caisson for the transport of goods as defined in claim 1.

Owing to the present invention it is possible to provide a container which has an extractable flatbed with resting feet as an integral part, which allows the loading and the unloading of the goods without the aid of the wharf. In addition, according to the present invention a new universal type container is obtained which allows its utilisation both with and without wharves, and in addition to that, both when placed on a lorry and when placed on the ground.

The characteristics and the advantages of the present invention will become evident from the following detailed description of an embodiment thereof, which is illustrated as a non limiting example in the enclosed drawings, in which:
Figures 1- 6 represent an example of use of the present invention in different stages;
Figure 7 shows and example of embodiment of the flatbed in perspective view;
Figure 8 shows and example of embodiment of the flatbed in a side view;
Figure 9 shows and example of embodiment of the flatbed in a front view;
Figure 10 shows the base of the container in a front view;
Figure 11 shows the base of the container in a top view.

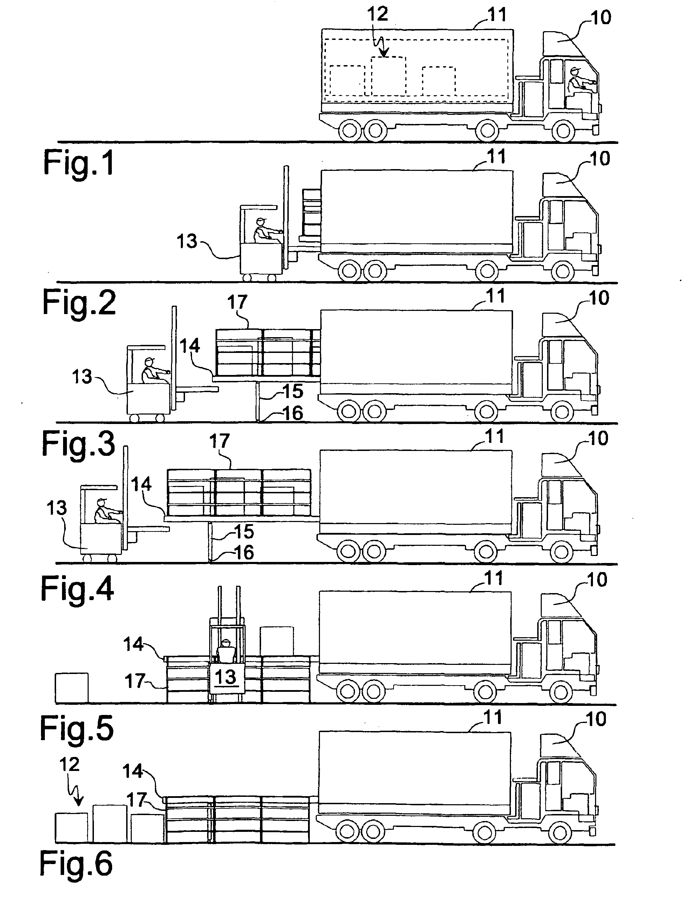

Let's now consider Figures 1-6 which show a lorry 10 which transports a container 11, or any other type of caisson to handle the goods 12, placed inside of it.

Inside the container 11 a flatbed 14 is predisposed, which is integral part of the same, which can slide inside the container (on its lower surface), as we will see hereinafter. The flatbed 14 is provided with a pair of resting feet 15, hinged in the flatbed 14, and preferably provided with wheels 16, which can rest on the ground capable to sustain the flatbed 14. On the sides of the flatbed 14 walls 17 are provided in order to contain the goods sideways in such a way that these cannot fall from the sides during the operations of extraction or insertion of the flatbed 14 from the container 11.

At the moment of the unloading of the goods 12, a fork lift 13 gets near the opening of the container 11, hooks the flatbed 14 and it extracts it by pulling it. The pair of resting feet 15 gets rotated manually in order to rest on the ground, thus allowing the complete exit of the flatbed 14 from the container 11, up until the reaching of an end of stroke not shown. In this way the flatbed 14 is almost totally external to the walls of the container 11, resting and fastened (as we will see hereinafter) to the end of the container on one side and by the resting feet 15 on the other one, with the goods totally in view from the outside.

Once the flatbed 14 is extracted, the walls 17 get lowered down and the goods can be unloaded. The unloading (or the loading) of the goods can be carried out, in this way, on three sides of the flatbed 14 thus using very short times, without the fork lift to introduce into the container, also owing to the possibility to be able to use even more than one fork lift.

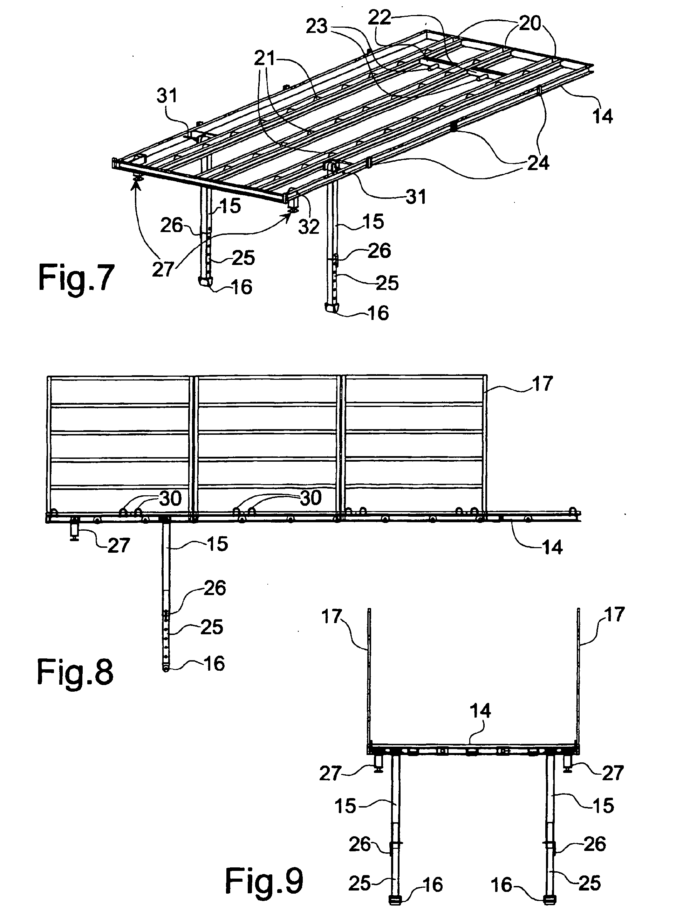

We refer now to Figure 7 which shows in perspective an embodiment of the flatbed 14, without the walls 17.

The flatbed 14 is made up of a rectangular frame made of metal section bar on which marine plywood (not shown) of about 3 cm in thickness will then be placed which will serve as a base for the goods. The dimensions of the flatbed 14 are the ones which allow it to be able to slide inside standard containers. Inside the external frame, according to the longitudinal direction of the frame (long side of the frame) three pairs of bars 20 of section bar equally distant to each other are preferably placed. Each one of these bars 20 is suitable to sustain a plurality of wheels 21, for example 10 in the caisson of a 20 feet container, lined up with each other and capable to slide along the base of the container 11. The wheels 21 are of the type having a small diameter, a little more than the thickness of the flatbed 14, and high carrying capacity.

In the vicinities of one end of the flatbed 14 (as regards the long side of the frame), the one which will be the most internal one in the container 11, two small bars 22 are placed, arranged transversally as related to the pairs of bars 20 and fastened to them. The distance of these bars from the end of the flatbed 14 is equal to about 10-20% of the entire length of the same flatbed 14. At the centre of each one of the bars 22 and perpendicularly to them a pin 23 is placed, facing toward the door of the container 11.

On the external edge of the flatbed 14, along the longer sides, guides 24 are placed which hold and guide the walls 17 when they are let down or lifted up.

The resting feet 15, hinged in the flatbed 14 in the vicinity (equal to a distance of about 20% of the entire length of the flatbed 14) of one end of the flatbed 14 (as related to the long side of the frame), the one closest to the door of the container 11, are telescopic and they have a portion 25 which can be extended, and they can be adjusted in height by means of holes provided in the extensible portion 25 and locked by means of pins 26. In condition of rest, the resting feet 15 are sunk in the frame 14. During the extraction of the flatbed 14 from the container 11, they are manually extracted from the resting position, they are adjusted in height in such a way so that their total length is equal to the one of the height of the plane of the container 11 from the ground.

They also get locked in vertical position by means of a pin 31 made of steel. The pin 31 is predisposed in such a way that the resting feet 15 will not accidentally close, and it is a pin passing in the external section bar of the flatbed 14 and in the same feet 15.

In the vicinity of one end of the flatbed 14 (as related to the long side of the frame), the one closest to the door of the container 11, and therefore near to where the resting feet 15 are hinged, an additional pair of resting feet 27 are hinged having smaller dimensions than the one of the resting feet 15 and equal to about 15-20 centimetres provided with wheels, to be used when the container 11 is unloaded on the ground utilising a port wharf and/or a warehouse. They also have a pin 32, analogous to the locking pin 31, in vertical position.

Figures 8 and 9 show the flatbed 14 comprehensive of walls 17 respectively in a side view and in a front view. In Figure 8 one can notice rings 30 fastened to the flatbed 14 which can be utilised for the fastening of the load with belts.

The walls 17 slide owing to the guides 24, made up of a steel C-section bar, in turn welded to the flatbed 14; the locking of the walls on the guides takes place both in the working position as well as in the position of rest by means of pins made of steel.

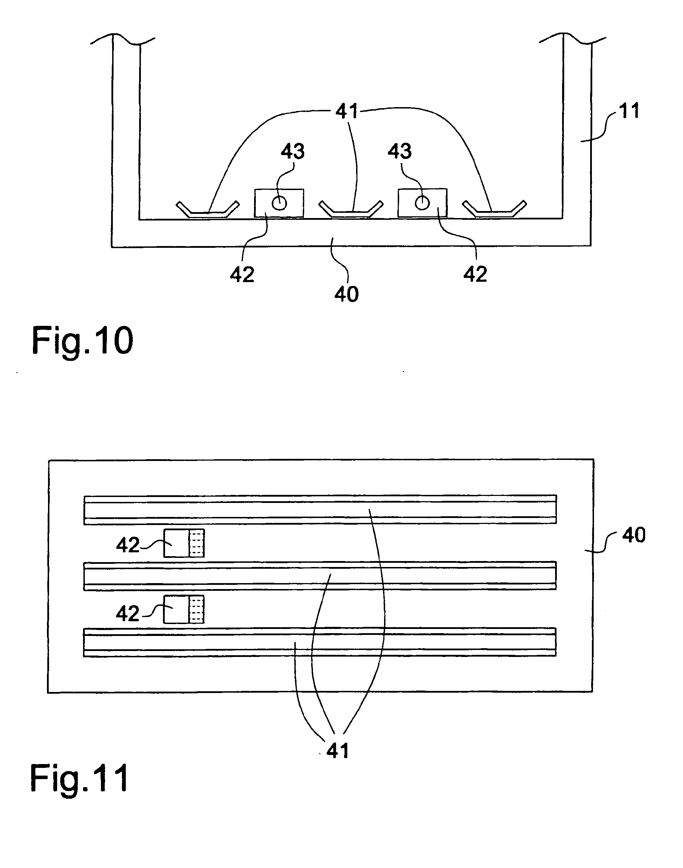

We now refer to Figures 10 and 11 which show the base 40 of the container 11. On the base 40 it is preferable to fasten guides 41 according to the longitudinal direction of the container (long side of the container) in order to facilitate and to guide the wheels 21 of the flatbed 14. The guides are in a number equal to the number of the pairs of bars 20, and they have a substantially U-shape, that is they have the edges slightly raised in order to contain and to guide the wheels 21.

Between the guides 41 and in the vicinity of one end of the base 40 toward the door of the container 11, L-shapes 42 are fastened, having the shape of an L. In the upper part of the L a hole 43 is provided. When the flatbed 14 is extracted, the L-shapes 42 stop the advancement of the bars 22 and the pins 23 will get into the holes 43. It turns out to be preferable to place a rubber profile between the L-shapes 42 and the bars 22 in order to attenuate the possible collision between these. The L-shapes 42 and the bars 22 have the function of end of stroke of the flatbed 14 when this gets extracted, and also the function to prevent possible vertical movements of the flatbed 14. In this way the flatbed 14 is as a result integral part of the container 11 and therefore it is not separable.

In an alternative embodiment the wheels 21 can be placed on the bottom internal surface of the caisson and the guides 41 can be placed on the bottom internal surface of the flatbed 14.

According to the present invention, there are great advantages and savings in time for the company which unloads or loads the goods, for the carrier which for the completion of these operations stops a time span considerably shorter than what takes place now, for the shipowner who can re-utilise the container for other trips, and for customs officer who can carry out more easily and in a shorter time the verifications of the goods on the complete load being loaded in the same container.

It is in fact faculty of Customs authorities to verify the transit goods by objectively controlling the nature of the goods inside the container, on the base of the accompanying documents and which are declared. Today this control can take place only summarily and only for parcels which are near the doors of the containers. In fact, when open it is possible to verify only the goods at sight, not being able to control the ones which are loaded at the end of the container, unless by completely emptying it with high expenditures, long times and the aid of a wharf and/or warehouse.

With the present invention it is sufficient to extract the flatbed 14, without the aid of any wharf, and the goods is thus as a result completely at sight, even the ones stored at the end of the container.

In the present description reference has been made, in particular way, to standard type containers, but the present invention is applicable to any type of container, such as 20', 40', 40' HQ, as also to any lorry or trailer having an open or closed caisson, for the transport goods. In this case too the loading and the unloading of the goods can easily take place without the aid of the wharf.

## Claims

1. Caisson (11) for the transport of goods comprising a flatbed (14) extractable from said caisson (11); said flatbed (14) being sliding along the bottom internal surface of said caisson (11); wherein
said flatbed (14) comprises at least one first pair of resting feet (15), hinged in said flatbed (14) in the vicinity of one of its ends, having a first horizontal rest position folded inside of said flatbed (14) and a second vertical working position, capable to sustain said flatbed (14) when said flatbed (14) is extracted from said caisson (11), **characterised in that** said at least one first pair of resting feet (15) comprises telescopic tubes adjustable in height by means of a locking pin (26) passing in said telescopic tubes, and said flatbed (14) comprises side walls (17) and guides (24) placed on the external edge of the greater sides of said flatbed (14) on which said side walls (17) can slide vertically.

2. Caisson (11) according to claim 1 **characterised in that** said at least one first pair of resting feet (15) is provided with wheels (16).

3. Caisson (11) according to any one of the previous claims **characterised in that** said at least one first pair of resting feet (15) comprises locking pins (31) when placed in said second vertical working position, passing in the external section bar of said flatbed (14) and in said at least one first pair of resting feet (15)

4. Caisson (11) according to any one of the previous claims **characterised in that** said flatbed (14) comprises at least one second pair of resting feet (27) with smaller dimensions than said at least one first pair of resting feet (15)

5. Caisson (11) according to any one of the previous claims **characterised in that** said flatbed (14) comprises at least one pair of plates provided with pins (22) placed in the vicinity of one of its ends suitable to cooperate with at least one pair of plates (42) provided with holes (23) fastened to one end of the base of said caisson (11).

6. Caisson (11) according to any one of the previous claims **characterised in that** said flatbed (14) comprises a plurality of wheels (21) and said caisson (11) comprises one base on which at least one guide (41) is placed which is suitable to guide the sliding of said plurality of wheels (21).

## Patentansprüche

1. Kasten (11) für den Transport von Gütern, welcher ein Flachbett (14) aufweist, welches aus dem Kasten (11) ausziehbar ist, wobei das Flachbett (14) zur inneren Bodenfläche des Kastens gleitbeweglich ist, das Flachbett (14) wenigstens ein erstes Paar von Auflagefüßen (15) aufweist, welche an dem Flachbett (14) in der Nähe einer der Enden angelenkt sind, und die eine erste horizontale Ruheposition einnehmen, in welcher sie in das Innere des Flachbetts (14) eingeklappt sind, und eine zweite vertikale Arbeitsposition einnehmen, in welcher sie das Flachbett (14) stützen, wenn das Flachbett (14) aus dem Kasten (11) herausgefahren ist, **dadurch gekennzeichnet, dass** das wenigstens eine Paar von Auflagefüßen (15) Teleskoprohre aufweist, die mit Hilfe eines Sicherungsbolzens (26) in der Höhe einstellbar sind, welcher durch die Teleskoprohre geht, und dass das Flachbett (14) Seitenwände (17) und Führungen (24) aufweist, welche auf dem Außenrand der größeren Seiten des Flachbetts (14) angeordnet sind, und auf denen die Seitenwände (17) in vertikaler Richtung gleitend bewegbar sind.

2. Kasten (11) nach Anspruch 1, **dadurch gekennzeichnet, dass** das wenigstens eine Paar von Auflagefüßen (15) mit Rädern (16) versehen ist.

3. Kasten (11) nach einem der vorangehenden Ansprüche, **dadurch gekennzeichnet, dass** das wenigstens eine Paar von Auflagefüßen (15) Sicherungsbolzen (31) aufweist, welche in der zweiten, vertikalen Arbeitsposition einrasten und in das innere Abschnittsteil des Flachbetts (14) und in das wenigstens eine erste Paar von Auflagefüßen (15) gehen.

4. Kasten (11) nach einem der vorangehenden Ansprüche, **dadurch gekennzeichnet, dass** das Flachbett (14) wenigstens ein zweites Paar von Auflagefüßen (27) aufweist, welche kleinere Abmessungen als das wenigstens eine erste Paar von Auflagefüßen (15) haben.

5. Kasten (11) nach einem der vorangehenden Ansprüche, **dadurch gekennzeichnet, dass** das Flachbett (14) wenigstens ein Paar von Platten aufweist, welche mit Bolzen (22) versehen sind, die in der Nähe einer der Enden derart angeordnet sind, dass sie mit wenigstens einem Paar von Platten (22) zusammen arbeiten können, welche mit Öffnungen (23) versehen sind, und die fest mit einem Ende der Basis des Kastens (11) verbunden sind.

6. Kasten (11) nach einem der vorangehenden Ansprüche, **dadurch gekennzeichnet, dass** das Flachbett (14) eine Mehrzahl von Rädern (21) aufweist, und dass der Kasten (11) eine Basis aufweist, auf der wenigstens eine Führung (41) angeordnet ist, welche geeignet ist, die Gleitbewegung der Mehrzahl von Rädern (21) zu führen.

## Revendications

1. Conteneur (11) pour le transport de marchandises comprenant une plate-forme (14) pouvant être extraite dudit conteneur (11), ladite plate-forme (14) glissant sur la surface inférieure interne dudit conteneur (11) ; dans lequel
ladite plate-forme (14) comprend au moins une première paire de pieds d'appui (15), articulés sur ladite plate-forme (14) au voisinage de l'une de ses extrémités, ayant une première position, ou position de repos, horizontale pliée à l'intérieur de ladite plate-forme (14) et une deuxième position, ou position de travail, verticale, capable de soutenir ladite plate-forme (14) quand ladite plate-forme (14) est extraite dudit conteneur (11), **caractérisé en ce que** ladite au moins une première paire de pieds d'appui (15) comprend des tubes télescopiques réglables en hauteur au moyen d'un axe de blocage (26) qui passe dans lesdits tubes télescopiques, et ladite plate-forme (14) comprend des parois latérales (17) et des guides (24) placés sur le bord extérieur des grands côtés de ladite plate-forme (14) sur lesquels lesdites parois latérales (17) peuvent glisser verticalement.

2. Conteneur (11) selon la revendication 1, **caractérisé en ce que** ladite au moins une première paire de pieds d'appui (15) est pourvue de roues (16).

3. Conteneur (11) selon l'une quelconque des revendications précédentes, **caractérisé en ce que** ladite au moins une première paire de pieds d'appui (15) comprend des axes de blocage (31) dans ladite deuxième position, ou position de travail, verticale, passant dans la barre de section extérieure de ladite plate-forme (14) et dans ladite au moins une première paire de pieds d'appui (15).

4. Conteneur (11) selon l'une quelconque des revendications précédentes, **caractérisé en ce que** ladite plate-forme (14) comprend au moins une deuxième paire de pieds d'appui (27) ayant des dimensions inférieures à celles de ladite au moins une première paire de pieds d'appui (15).

5. Conteneur (11) selon l'une quelconque des revendications précédentes, **caractérisé en ce que** ladite plate-forme (14) comprend au moins une paire de plaques pourvues d'axes (22) placées au voisinage de l'une de ses extrémités apte à coopérer avec au moins une paire de plaques (42) pourvues de trous (23) fixés à une extrémité de la base dudit conteneur (11).

6. Conteneur (11) selon l'une quelconque des revendications précédentes, **caractérisé en ce que** ladite plate-forme (14) comprend une pluralité de roues (21) et ledit conteneur (11) comprend un socle sur lequel au moins un guide (41) est placé qui est adapté pour guider le glissement de ladite pluralité de roues (21).
